# FASCICULE DE BREVET EUROPEEN

(11) **EP 0 511 884 B1**
(45) Date de publication et mention de la délivrance du brevet: **26.10.1994**
(21) Numéro de dépôt: 92400827.9
(22) Date de dépôt: 26.03.1992
(51) Int. Cl.: B60J 1/14, E05D 7/12

(54) **Articulation pour vitre pivotante**
Gelenk für drehbares Fenster
Articulation for rotating window

(30) Priorité: 11.04.1991 FR 9104953
(43) Date de publication de la demande: 04.11.1992
(73) Titulaire: AUTOMOBILES PEUGEOT, 75116 Paris (FR); AUTOMOBILES CITROEN, 92200 Neuilly-sur-Seine (FR)
(72) Inventeur: Guinois, Pascal, F-91680 Bruyeres-le-Chatel (FR); Brusca, Vincent, F-91260 La Ville-du-Bois (FR)
(74) Mandataire: Boivin, Claude

(56) Documents cités:
- FR-A- 2 280 775
- US-A- 4 186 525
- US-A- 4 850 142

## Description

Certains véhicules automobiles comportent des vitres pivotantes; c'est le cas notamment pour les vitres de custode des véhicules à deux portes qui, usuellement, peuvent être entrebaillées. Les articulations reliant la vitre à la structure du véhicule amènent souvent des perçages dans le verre et sont encombrantes, inesthétiques et génèrent des bruits aérodynamiques.

On connaît des charnières fixées sur le verre par collage. Ce type de collage demande beaucoup de précautions et est exécuté en préparation hors de la ligne d'assemblage. Il faut donc que l'ensemble ainsi préparé se prête à un montage aisé sur la ligne d'assemblage.

L'invention a pour objet une articulation pour vitre montée pivotante par rapport à une structure fixe, qui évite les inconvénients ci-dessus et se prête à un montage aisé et facilement robotisable.

Le document US-A-4186525 décrit une articulation pour panneau pivotant par rapport à une structure fixe, cette articulation comportant un premier élément monté sur le panneau et comprenant au moins deux volets de maintien qui peuvent être fixés sur l'un des bords du panneau et un second élément fixé sur la structure et ayant, d'une façon générale, une section en équerre.

L'articulation selon l'invention est caractérisée en ce que le premier élément,réalisé en une matière relativement mince qui a la forme d'une pince dans laquelle ledit bord du panneau peut être engagé et collé, comporte les deux volets de maintien qui sont formés dans cette pince et en ce que le second élément est muni d'au moins deux bossages ayant le même écartement relatif que les volets de maintien, chaque bossage présentant une ouverture dans laquelle un volet de maintien peut s'engager, cette articulation comportant en outre des moyens pour verrouiller les volets de maintien dans les ouvertures.

Divers mode de réalisation de l'invention sont spécifiés dans les revendications dépendantes 2 à 5.

On a décrit ci-après à titre d'exemple non limitatif, un mode de réalisation de l'articulation selon l'invention, avec référence aux dessins annexés dans lesquels :

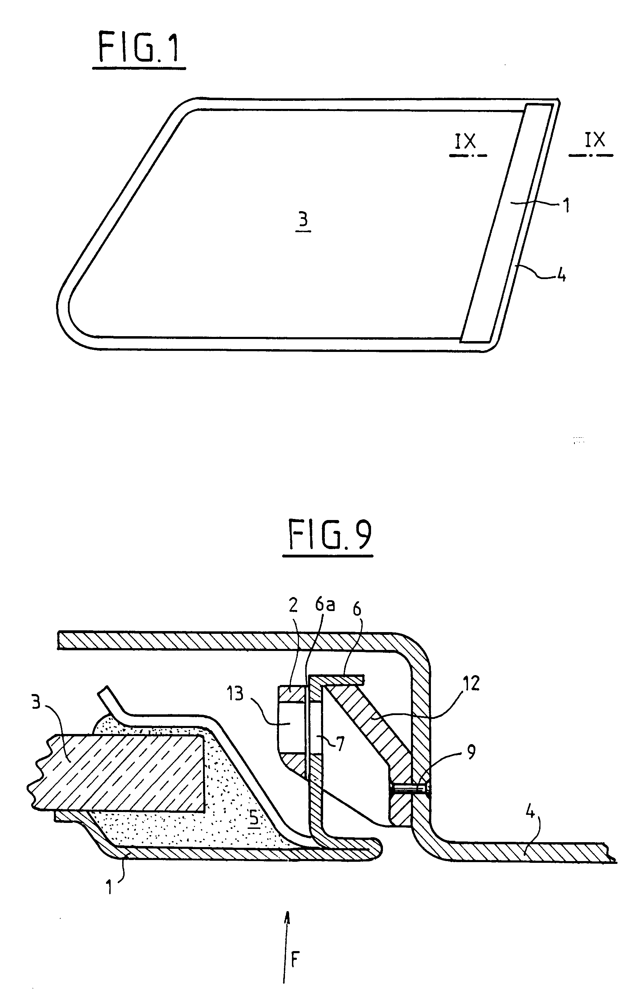

La Figure 1 montre en élévation une vitre pivotante de véhicule automobile;

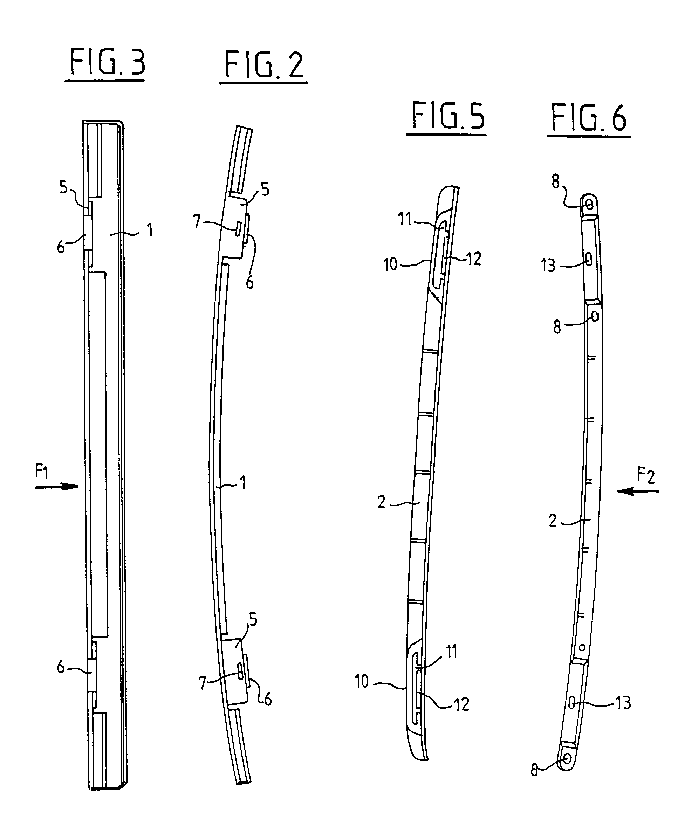

La Figure 2 est une vue suivant F1 de la Figure 3 d'un premier élément de l'articulation;
La Figure 3 en est une vue en élévation;
La Figure 4 est une vue en perspective d'un détail de cet élément;
La Figure 5 est une vue suivant F2 de la Figure 6 d'un second élément de l'articulation;
La Figure 6 est une vue en élévation de ce second élément;

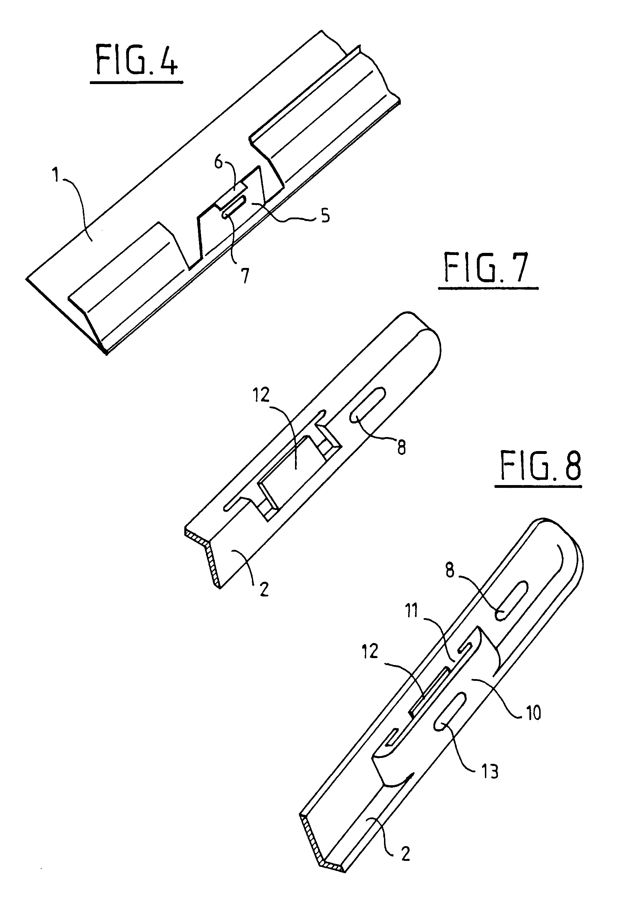

La Figure 7 est une vue en perspective d'un détail de cet élément;
La Figure 8 montre en perspective ce détail vu par en dessous;
La Figure 9 est une vue en coupe agrandie suivant IX-IX de la Figure 1.

Telle qu'elle est représentée aux dessins, l'articulation comprend deux éléments 1 et 2 destinés à être fixés respectivement sur une vitre 3 et sur une structure de véhicule 4.

L'élément 1 s'étend sur toute la hauteur de la vitre et est réalisé en une matière relativement,mince, par exemple en tôle de 0,8mm; il a la forme d'une pince dans laquelle l'un des bords latéraux de la vitre 3 peut être engagé et dont les côtés sont parallèles et de largeurs inégales. Le côté le plus petit de cette pince est découpé au voisinage de chacune de ses extrémités pour former deux volets de maintien 5 relevés perpendiculairement au plan du côté et présentant chacun une zone 6 rabattue sensiblement à 90° vers l'extérieur de la pince, formant ainsi une arête 6a. Ces volets 5 présentent chacun une ouverture médiane 7.

De son côté l'élément 2 a d'une façon générale une section en équerre et est percé de trous 8 permettant sa fixation par des rivets 9 sur la structure 4. Il présente, à proximité de ses extrémités, deux bossages 10 qui ont le même écartement relatif que les volets 5. Chacun de ces bossages présente une ouverture 11 dont la longueur est sensiblement égale à la largeur d'un volet 5 et dans laquelle s'étend une languette flexible de butée 12. Le bossage présente un trou 13 en regard de ce volet.

L'élément 2 ayant été fixé à la structure 4 et l'élément 1 ayant été chaussé et collé sur la vitre 1, on engage les volets 5 dans les ouvertures 11 et on exerce une poussée sur l'élément 1 comme indiqué par la flèche F à la Figure 9. Les languettes 12 s'effacent élastiquement pour laisser passer les zones rabattues 6. Puis elles reviennent s'engager derrière ces zones, ce qui assure la fixation de la vitre sur la structure par une opération simple et facilement robotisable. Grâce à l'élasticité des volets 5, la vitre peut pivoter autour d'un axe sensiblement défini par les arêtes 6a.

L'articulation permet ainsi l'entrebaîllement de la vitre .

Si l'on désire démonter la vitre 3, il suffit d'introduire un outil, par exemple la lame d'un tournevis, dans les trous 13 et 7 et de repousser les languettes 12 de façon à dégager les zones rabattues 6.

## Revendications

1. Articulation pour panneau pivotant (3) par rapport à une structure fixe, cette articulation comportant un premier élément (1) monté sur le panneau (3) et comprenant au moins deux volets de maintien (5) qui peuvent être fixés sur l'un des bords du panneau (3) et un second élément (2) fixé sur la structure et ayant, d'une façon générale, une section en équerre,
caractérisée en ce que le premier élément (1) réalisé en une matière relativement mince qui a la forme d'une pince dans laquelle ledit bord du panneau (3) peut être engagé et collé, comporte les deux volets de maintien (5) qui sont formés dans cette pince et en ce que le second élément (2) est muni d'au moins deux bossages (10) ayant le même écartement relatif que les volets de maintien (5), chaque bossage présentant une ouverture (11) dans laquelle un volet de maintien (5) peut s'engager, cette articulation comportant en outre des moyens pour verrouiller les volets de maintien (5) dans les ouvertures (11).

2. Articulation selon la revendication 1,
caractérisée en ce que les moyens pour verrouiller les volets de maintien (5) dans les ouvertures (11) sont des languettes flexibles de butée (12) s'étendant chacune dans l'un des bossages (10).

3. Articulation selon la revendication 2,
caractérisée en ce que chacun des volets de maintien (5) présente une zone (6) rabattue vers l'extérieur formant une arête (6a) et coopérant avec la languette flexible de butée (12) correspondante.

4. Articulation selon la revendication 3,
caractérisée en ce que la vitre peut pivoter autour d'un axe sensiblement défini par les arêtes (6a).

5. Articulation selon l'une des revendications 2 à 4,
caractérisée en ce que l'élément (2) et le volet flexible (5) comportent des trous (13 et 7) en regard de la languette de butée (12).

## Claims

1. Joint for a pivoting panel (3) with respect to a fixed structure, this joint comprising a first element (1) mounted on the panel (3) and including at least two holding flaps (5) which can be secured to one of the edges of the panel (3), and a second element (2) secured to the structure and generally having a square section,
wherein the first element (1), made of a relatively thin material having the shape of a clamp in which said edge of the panel (3) is able to be engaged and glued, comprises the two holding flaps (5) which are formed in this clamp and wherein the second element (2) is provided with at least two bosses (10) having the same spacing as the holding flaps (5), each boss having an opening (11) in which a holding flap (5) is able to be engaged, said joint further comprising means for locking the holding flaps (5) in the openings (11).

2. Joint according to claim 1,
wherein the means for locking the holding flaps (5) in the openings (11) are flexible stop tongues (12) each extending into one of the bosses (10).

3. Joint according to claim 2,
wherein each of the holding flaps (5) has a zone (6) folded back towards the outside forming an edge (6a) and cooperating with the corresponding flexible stop tongue (12).

4. Joint according to claim 3,
wherein the window pane is able to pivot around an axis defined approximately by the edges (6a).

5. Joint according to any one of claims 2 to 4,
wherein the element (2) and the flexible flap (5) comprise holes (13 and 7) opposite the stop tongue (12).

## Patentansprüche

1. Gelenkverbindung für ein gegenüber einer feststehenden Struktur verschwenkbares plattenförmiges Bauteil (3), die ein erstes an dem Baute (3) befestiges Teil (1) enthält und Wenigstens zwei Halteblenden (5) umfaßt, die an einem der Ränder des Bauteils (3) befestigt sein können, sowie ein zweites Teil (2) umfaßt, das an der Struktur befestigt ist und im wesentlichen einen winkelförmigen Querschnitt aufweist, **dadurch gekennzeichnet**,
daß das erste Teil (1), das aus einem relativ dünnen Material hergestellt ist und die Form einer Klammer aufweist, in welche besagter Rand des Bauteils (3) eingesteckt und verklebt sein kann, die zwei Halteblenden (5) enthält, die in dieser Klammer ausgebildet sind, und daß das zweite Teil (2) mit wenigstens zwei Vorsprüngen (10) versehen ist, die denselben Abstand wie die Halteblenden (5) und jeweils eine Öffnung (11) aufweisen, in die eine Halteblende (5) eingreifen kann, wobei diese Gelenkverbindung außerdem Mittel zum Verriegeln der Halteblenden (5) in den Öffnungen (11) umfaßt.

2. Gelenk nach Anspruch 1, dadurch gekennzeichnet, daß die Mittel zum Verriegeln der Halteblenden (5) in den Öffnungen (11) flexible Anschlag-Zungen sind (12), die sich jeweils in einem der Vorsprünge (10) erstrecken.

3. Gelenk nach Anspruch 2, dadurch gekennzeichnet, daß jede Halteblende (5) einen nach außen umgebogenen Bereich (6) aufweist, der eine Kante (6a) ausbildet und mit der entsprechenden flexiblen Anschlag-Zunge (12) zusammenwirkt.

4. Gelenk nach Anspruch 3, dadurch gekennzeichnet, daß die Fensterscheibe um eine im wesentlichen durch die Kanten (6a) festgelegts Achse verschwenken kann.

5. Gelenk nach einem der Ansprüche 2 bis 4, dadurch gekennzeichnet, daß das Teil (2) und die flexible Blende (5) Löcher (13 und 7) aufweisen, die der Anschlag-Zunge (12) gegenüberliegen.
